# EUROPEAN PATENT SPECIFICATION

(11) **EP 1 760 804 B1**
(45) Date of publication and mention of the grant of the patent: **05.10.2016**
(21) Application number: 06018210.2
(22) Date of filing: 31.08.2006
(51) Int. Cl.: H01M 2/02

(54) **No-welding contact type secondary battery**
Nicht-geschweisste Verbindung für Sekundärbatterien
Contact sans soudage pour batterie secondaire

(30) Priority: 02.09.2005 KR 20050081480
(43) Date of publication of application: 07.03.2007
(73) Proprietor: LG Chemical Limited, Seoul 150-721 (KR)
(72) Inventor: Lee, Dongcheol 107-901, Hyundai Apt., Jeollabuk-do 570-080 (KR); Kim, Tae il 111, Haan 3-dong, Gyeonggi-do 423-755 (KR)
(74) Representative: Hoffmann Eitle

(56) References cited:
- EP-A- 1 473 785
- US-A1- 2004 009 334

## Description

### BACKGROUND OF THE INVENTION

The present invention relates to a no-welding contact type secondary battery, and, more particularly, to a secondary battery comprising an electrode assembly mounted in a sheet-type battery case including a metal layer and a resin layer, wherein the secondary battery is constructed such that electrode terminals of a battery cell are inserted through terminal insertion slits formed in a connecting member so as to accomplish the electrical connection between the electrode terminals and the connecting member and such that a protection circuit module (PCM) member, which has conductive coupling parts that can be coupled to the connecting member, is coupled to the connecting member so as to accomplish the electrical connection between the PCM member and the connecting member, whereby the electrical connection is accomplished without welding.

With the popularization of wireless electronic products, various kinds of batteries have been recently developed and commercially used. One of such batteries is a secondary battery, which can be repeatedly charged and discharged, and therefore, is usually used as a battery for the wireless electronic products. The service life of the secondary battery is abruptly reduced due to overcharge and overdischarge of the secondary battery. For this reason, a protection circuit module (PCM), which is a protection circuit element for preventing the overcharge and the overdischarge of the secondary battery, is mounted in the secondary battery.

Generally, a battery pack includes a battery cell, nickel plates, a PCM, and a case. The battery pack is usually assembled, as a soft pack, such that positive and negative taps of the battery cell are connected to the PCM via the nickel plates by spot welding or soldering. More specifically, the nickel plates are fixed to the battery cell by spot welding, and then the PCM is fixed to the nickel plates by spot welding. As a result, the PCM is electrically connected to the battery cell. In this way, the battery pack is manufactured.

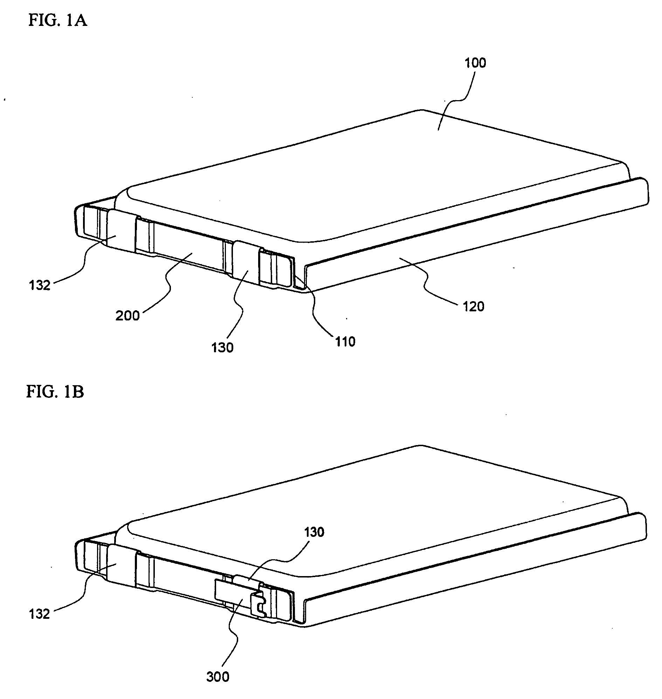

FIGS. 1A to IE are views typically illustrating ordinary electrical connection steps in the process for manufacturing a conventional battery pack.

Referring first to FIG. 1A, an upper end sealing part 110 and a side sealing part 120 of a battery cell 100, which is a pouch-shaped secondary battery, are bent vertically upward when viewing on the plane of FIG. 1A. To the bent upper end sealing part 110 is mounted a first insulating member 200. Subsequently, a cathode lead 130 and an anode lead 132 are bent vertically downward, when viewing on the plane of FIG. 1A, such that the cathode lead 130 and the anode lead 132 are placed on the first insulating member 200. Electrical insulation between the electrode leads 130 and 132 and a battery case is stably maintained by the first insulating member 200.

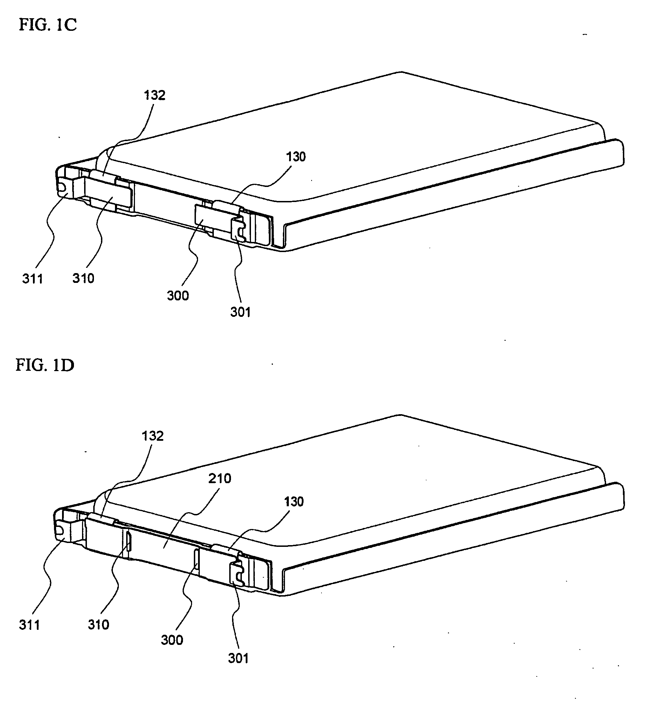

Referring to FIGS. 1B and 1C, nickel plates 300 and 310 are securely coupled to the cathode lead 130 and the anode lead 132, respectively, by spot welding. The nickel plates 300 and 310 are constructed in a structure in which connection ends 301 and 311 of the nickel plates 300 and 310, which are opposite to coupling regions of the nickel plates 300 and 310 where the nickel plates 300 and 310 are coupled to the electrode leads 130 and 132, respectively, are bent upward such that the connection ends 301 and 311 of the nickel plates 300 and 310 are spaced apart from the upper end sealing part 110.

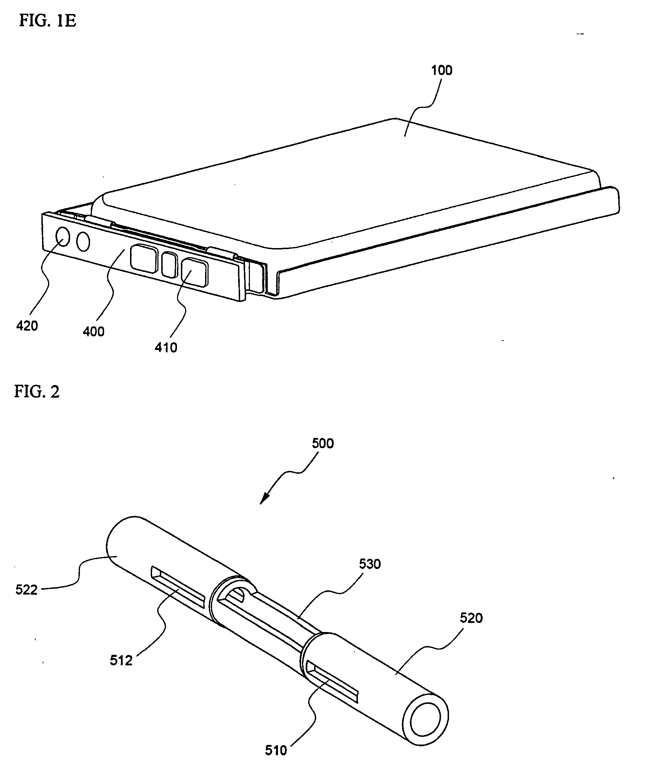

Referring to FIG. 1D, a second insulating member 210 is mounted so as to cover the remaining regions of the nickel plates 300 and 310 excluding the connection ends 301 and 311. The second insulating member 210 serves to prevent the electrical connection between a PCM 400 (see FIG. 1E) and the remaining regions of the nickel plates 300 and 310 excluding the connection ends 301 and 311.

Referring to FIG. 1E, the PCM 400 is mounted, and then, the electrical connection between the connection ends 301 and 311 (see FIG. 1D) and the PCM 400 is carried out. The PCM 400 includes a protection circuit for protecting a battery from overcharge, overdischarge, and overcurrent. Also, the PCM 400 includes an external input and output terminal 410 for electrical connection with an external device (not shown) and a test point 420 for checking submergence of the battery. The coupling between the PCM 400 and the nickel plates 300 and 310 (see FIG. 1D) is accomplished, for example, by spot welding, laser welding, or soldering.

After the electrical connection of the battery cell 100 is performed, the battery cell 100 is mounted in a pack case, whereby a battery pack is manufactured.

In the above-described conventional secondary battery, however, several welding or soldering steps for electrical connection of the secondary battery are needed, and the welding or soldering steps must be carried out with high precision because the structure of the secondary battery is small. As a result, the defective product rate is increased. Furthermore, addition of the above-mentioned steps to the product manufacturing process increases the manufacturing costs of the product.

Accordingly, a method of assembling the PCM and the battery cell without performing the spot welding or soldering steps is urgently required. Technologies omitting the welding or soldering steps are disclosed in Korean Utility Model Registration No. 0350657, which provides a method of performing contact between contact parts mounted on a PCM in a protruding fashion and a cathode and an anode of a battery cell, in Korean Unexamined Patent Publication No. 2004-74487, which provides a method of using a compression coil spring as a connector for connecting terminals of a battery cell and a PCM, and in Korean Patent Registration No. 0300428, which provides a method of including a safety means in a case made of synthetic resin and using a bonding agent.

In the method of using the compression coil spring, however, the height of the spring must be so large as to provide appropriate elasticity, and it is difficult to accurately locate a contact region of the spring where the spring is in contact with the battery cell. As a result, the assembly process is troublesome and difficult. Furthermore, the above-mentioned methods have problems in that the contact regions are easily separated from the battery cell, when the battery cell drops or external impacts are applied to the battery cell, and therefore, the structural stability is very low.

Consequently, it is urgently requested to develop a battery pack that can be manufactured with high stability and productivity while the assembly of the PCM with the battery cell is simplified.

### SUMMARY OF THE INVENTION

Therefore, the present invention has been made to solve the above-mentioned problems, and other technical problems that have yet to be resolved.

As a result of a variety of extensive and intensive studies and experiments to solve the problems as described above, when electrode terminals are inserted through a specific connecting member without using conventional nickel plates, the connecting member is pushed toward a battery cell such that the connecting member is mounted on the upper end of the battery cell, and a protection circuit module (PCM), which has conductive coupling parts that can be coupled to the connecting member, is coupled to the connecting member, electric connection between the electrode terminals and the PCM is accomplished without welding or soldering, and furthermore, the coupling state is maintained, even when the battery cell drops or external impacts are applied to the battery cell, due to high physical stability of the coupling regions. The present invention has been completed based on the above-mentioned discovery.

In accordance with one aspect of the present invention, the above and other objects can be accomplished by the provision of a secondary battery with the features of claim 1.

The secondary battery with the above-stated construction according to the present invention is assembled by using the connecting member and the PCM member having the conductive coupling parts. As a result, spot welding or soldering is omitted when performing the electrical connection between the terminals of the battery cell and the PCM member. Consequently, the defective product rate is minimized. Furthermore, equipment, such as a spot welding device or a soldering device, is not necessary, and therefore, the manufacturing costs of the secondary battery are reduced.

Also, the secondary battery according to the present invention has an advantage in that the secondary battery is manufactured by using a unitary structure, and therefore, the number of components constituting the secondary battery is decreased, and therefore, the assembly process is simplified. In addition, the structure of a soft pack is simple, and therefore, the efficiency of using the inner space of the pack is maximized.

The connecting member according to the present invention serves to securely fix the PCM member to the battery cell so as to maintain the electrical connection between the PCM member and the battery cell. In order to accomplish the electrical connection between the PCM member and the battery cell, the terminal insertion slits are formed in the connecting member. For example, the terminal insertion slits may be formed through the connecting member at predetermined positions corresponding to the electrode terminals of the battery cell such that the electrode terminals are inserted through the insertion slits to accomplish the connection between the electrode terminals and the connecting member. In this case, predetermined regions of the connecting member where the terminal insertion slits are formed are made of a conductive material, and therefore, the electrical conduction between the electrode terminals and the connecting member is accomplished.

For example, the connecting member may be a polygonal or cylindrical member having a length equal to or less than the width of the battery cell. However, the present invention is not limited to the specified shapes. The connecting member is constructed such that the electrode terminals of the battery cell can be inserted through the insertion slits of the connecting member, and the insertion slits and/or the outer surface of the connecting member are made of a conductive material. On the other hand, the cathode insertion slit, through which the cathode terminal is inserted, and the anode insertion slit, through which the anode terminal is inserted, are electrically isolated from each other.

In a preferred embodiment, the connecting member is constructed in a cylindrical structure at predetermined regions of the connecting member where the terminal insertion slits are formed, and the terminal insertion slits and/or the outer circumferential surface of the connecting member adjacent to the terminal insertion slits are made of a conductive material.

Preferably, the PCM member is a printed circuit board (PCB) having a protection circuit printed thereon, and the PCM member is provided at the lower surface thereof with conductive coupling parts, which are coupled to the connecting member. The coupling parts are not particularly restricted so long as the coupling parts can be connected to the cathode and anode terminals of the battery cell via the connecting member, and the coupling parts can couple the PCM member to the connecting member.

The coupling parts are constructed in a structure in which the coupling parts can be detachably coupled to the connecting member while the coupling parts surround the outer surface of the connecting member. Specifically, the coupling parts are constructed in an elastic structure in which the coupling parts have an inner surface corresponding to the sectional shape of the connecting member such that the coupling parts can surround the connecting member, and the lower ends of the coupling parts are open such that the coupling parts can be coupled to the connecting member in a fitting fashion.

The coupling parts are connected to the protection circuit of the PCM member. Also, the coupling parts are connected to the connecting member. Consequently, the coupling parts must have conductivity as well as specific strength so as to stably maintain the electrical connection between the PCM member and the connecting member. For example, the coupling parts may be made of a metal material, such as nickel or nickel alloy.

According to the present invention, the coupling between the connecting member and the PCM member is accomplished by pushing the connecting member, through the terminal insertion slits of which the electrode terminals have been inserted, toward the battery cell and coupling the coupling parts of the PCM member to the connecting member. When the connecting member is pushed toward the battery cell, it is preferable to attach the electrode terminals to the connecting member as tightly as possible. According to circumstances, it is possible that the connecting member, through the terminal insertion slits of which the electrode terminals have been inserted, is pushed toward the battery cell, the PCM member is coupled to the connecting member, and the connecting member is fixed to the battery cell.

Fixing of the connecting member to the upper end of the battery cell may be accomplished in various manners. For example, the connecting member may be fixed to the battery cell by means of double-sided adhesive tape. Alternatively, the connecting member may be fixed to the battery cell by means of coupling members mounted at contact regions of the battery cell and the connecting member or a coupling structure formed at the contact regions of the battery cell and the connecting member. In the former example, the double-sided adhesive tape is disposed between the upper end of the battery cell and the connecting member such that the connecting member can be tightly attached to the upper end of the battery cell by means of the double-sided adhesive tape.

In accordance with another aspect of the present invention, there is provided a battery pack including the above-described secondary battery as a soft pack.

The secondary battery includes a pouch-shaped battery cell having an electrode assembly mounted in a pouch-shaped case made of a laminate sheet consisting of a metal layer and a resin layer. Consequently, the mechanical strength of the secondary battery is low. For this reason, the secondary battery is mounted in an additional pack case, when the battery pack is manufactured, so as to supplement the mechanical strength of secondary battery and protect relevant elements of the secondary battery.

The connecting member and the PCM member were applied to the manufacture of a battery pack, and the result thereof revealed that the assembly of the battery pack is very easy, and, even when the completed battery pack drops or external impacts are applied to the battery pack, the coupling state is stably maintained, whereby a possibility that the battery pack breaks down is considerably reduced. Consequently, it was proved that it is possible to achieve the stable electrical connection between the electrode terminals of the battery cell and the PCM member without welding.

### BRIEF DESCRIPTION OF THE DRAWINGS

The above and other objects, features and other advantages of the present invention will be more clearly understood from the following detailed description taken in conjunction with the accompanying drawings, in which:
FIGS. 1A to IE are views illustrating ordinary electrical connection steps in the process for manufacturing a conventional battery pack;
FIG. 2 is a perspective view illustrating a connecting member that can be used in a secondary battery according to an embodiment of the present invention;
FIG. 3 is a perspective view illustrating a protection circuit module (PCM) member that can be used in a secondary battery according to an embodiment of the present invention; and
FIGS. 4A to 4C are views illustrating a process for performing the electrical connection of a battery cell using the connecting member shown in FIG. 2 and the PCM member shown in FIG. 3.

### DETAILED DESCRIPTION OF PREFERRED EMBODIMENTS

Now, preferred embodiments of the present invention will be described in detail with reference to the accompanying drawings. It should be noted, however, that the scope of the present invention is not limited by the illustrated embodiments.

FIG. 2 is a perspective view illustrating a connecting member 500 that can be used in a secondary battery according to an embodiment of the present invention.

Referring to FIG. 2, the connecting member 500 is constructed generally in a cylindrical structure. The connecting member 500 is provided adjacent to opposite ends thereof with terminal insertion slits 510 and 512. Specifically, the terminal insertion slits 510 and 512 are formed in cylindrical conductive connection parts 520 and 522, respectively, which are made of a metal material. The connection parts 520 and 522 are connected with each other via an insulation part 530, which is made of an electric-insulative plastic material.

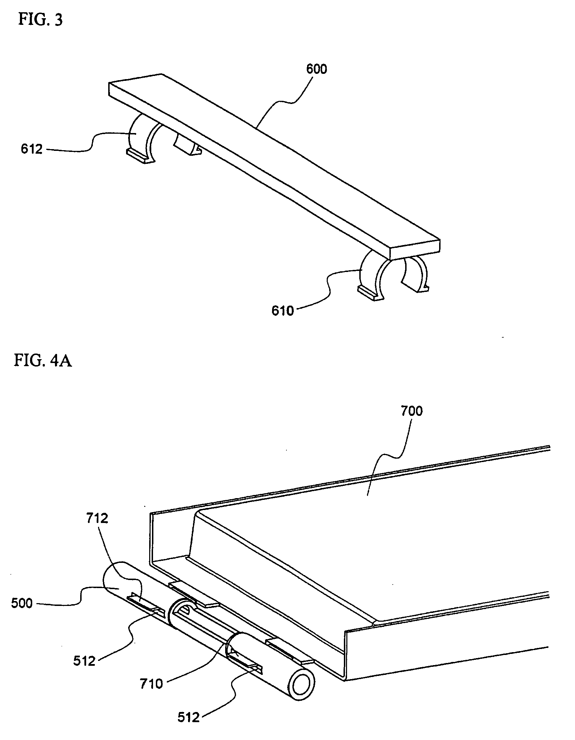

FIG. 3 is a perspective view illustrating a protection circuit module (PCM) member 600 that can be used in a secondary battery according to an embodiment of the present invention.

Referring to FIG. 3, the PCM member 600 is constructed in a structure in which two coupling parts 610 and 612 are attached to the lower surface of the PCM member 600, on which a protection circuit is printed, adjacent to opposite ends of the PCM member 600.

The coupling parts 610 and 612 are constructed in a clasp structure in which the coupling parts 610 and 612 have a cylindrical inner surface corresponding to the conductive connection parts 520 and 522, while the lower ends of the coupling parts 610 and 612 are open, such that the coupling parts 610 and 612 can be detachably coupled to the connection parts 520 and 522 of the connecting member 500 (see FIG. 2). The coupling parts 610 and 612 are made of an elastic metal material, and therefore, the coupling parts 610 and 612 can be easily coupled to the connection parts 520 and 522 of the connecting member 500 in a simple fitting fashion.

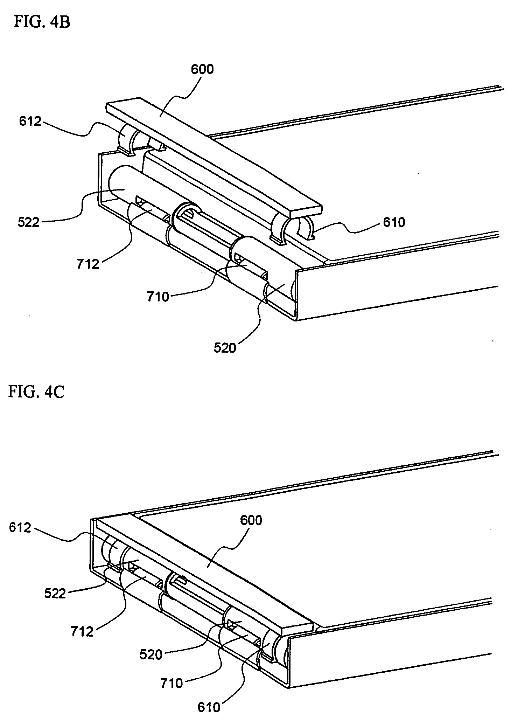

FIGS. 4A to 4C are views typically illustrating a process for performing the electrical connection of a battery cell 700 using the connecting member 500 shown in FIG. 2 and the PCM member 600 shown in FIG. 3.

Referring to these drawings, a cathode terminal 710 and an anode terminal 712 of the battery cell 700 are inserted through the terminal insertion slits 510 and 512 of the connecting member 500, respectively, and then the connecting member 500 is lifted upward such that the connecting member 500 is close to the battery cell 700. As a result, the plate-shaped electrode terminals 710 and 712 are bent, and therefore, the electrode terminals 710 and 712 are brought into contact with the conductive connection parts 520 and 522 of the connecting member. Subsequently, the coupling parts 610 and 612, which are attached to the lower surface of the PCM member 600, are coupled to the conductive connection parts 520 and 522 of the connecting member 500, respectively. Since the coupling parts 610 and 612 are also made of a metal material, the electrode terminals 710 and 712 are electrically connected with the coupling parts 610 and 612 of the PCM member 600 via the conductive connection parts 520 and 522, respectively.

In this way, it is possible to accomplish the electrical connection between the electrode terminals 710 and 712 of the battery cell 700 and the PCM member 600 without welding or soldering.

Although the connecting member is formed in the shape of a cylinder as shown in the drawings, the present invention is not limited thereto. The connecting member may be formed in various shapes so as to constitute a soft pack. Furthermore, coupling between the coupling parts of the PCM member and the connecting member may be accomplished in various structures.

Although the preferred embodiments of the present invention have been disclosed for illustrative purposes, those skilled in the art will appreciate that various modifications, additions and substitutions are possible, without departing from the scope of the invention as disclosed in the accompanying claims.

As apparent from the above description, the no-welding contact type secondary battery according to the present invention is assembled by using the connecting member, which is constructed such that the electrode terminal can be inserted through the connecting member, and the PCM member, which is provided with the coupling parts. As a result, spot welding or soldering, which is ordinarily performed during the assembly of the battery, is omitted. Consequently, the assembly process is simplified, and therefore, productivity is improved. Furthermore, the connection between the battery cell and the PCM member is accomplished by a single member. Consequently, the defective product rate is greatly decreased. In conclusion, the present invention is widely and effectively applicable to a secondary battery industry.

## Claims

1. A secondary battery comprising an electrode assembly mounted in a sheet-type battery case including a metal layer and a resin layer, wherein
electrode terminals (710, 712) of a battery cell (700) are inserted through terminal insertion slits (510, 512) formed in a connecting member (500) so as to accomplish the electrical connection between the electrode terminals (710, 712) and the connecting member (500) and a protection circuit module (PCM) member (600), which has conductive coupling parts (610, 612) that can be coupled to the connecting member (500), is coupled to the connecting member (500) so as to accomplish the electrical connection between the PCM member (600) and the connecting member (500),
wherein the coupling parts (610, 612) have an elastic structure in which the coupling parts (610, 612) have an inner surface corresponding to the sectional shape of the connecting member (500) such that the coupling parts (610, 612) can surround the connecting member (500), and the lower ends of the coupling parts (610, 612) are open such that the coupling parts (610, 612) can be coupled to the connecting member (500) in a fitting fashion.

2. The secondary battery according to claim 1, wherein
the connecting member (500) is a polygonal or cylindrical member having a length equal to or less than the width of the battery cell (700),
the connecting member (500) has insertion slits (510, 512) through which the electrode terminals (710, 712) of the battery cell (700) can be inserted, and
the insertion slits (510, 512) and/or the outer surface of the connecting member (500) are made of a conductive material.

3. The secondary battery according to claim 1, wherein
the connecting member (500) has a cylindrical structure at predetermined regions (520, 522) of the connecting member (500) where the terminal insertion slits (510, 512) are formed, and
the terminal insertion slits (510, 512) and/or the outer circumferential surface of the connecting member (500) adjacent to the terminal insertion slits (510, 512) are made of a conductive material.

4. The secondary battery according to claim 1, wherein
the PCM member (600) is a printed circuit board (PCB) having a protection circuit printed thereon, and
the PCM member (600) is provided at the lower surface thereof with conductive coupling parts (610, 612), which are coupled to the connecting member (500).

5. A battery pack including a secondary battery according to any one of claims 1 to 4 as a soft pack.

6. Method of fabricating the secondary battery according to claim 1, comprising the steps of pushing the connecting member (500), through the terminal insertion slits (510, 512) of which the electrode terminals (710, 712) have been inserted, toward the battery cell (700) and coupling the coupling parts (610, 612) of the PCM member (600) to the connecting member (500).

7. The method according to claim 6, wherein the connecting member (500) is fixed to the battery cell (700) by means of double-sided adhesive tape.

8. The method according to claim 6, wherein the connecting member (500) is fixed to the battery cell (700) by means of coupling members mounted at contact regions of the battery cell (700) and the connecting member (500) or a coupling structure formed at the contact regions of the battery cell (700) and the connecting member (500).

## Patentansprüche

1. Sekundärbatterie mit einer Elektrodenanordnung, die in einem bogenartigen Batteriegehäuse mit einer Metallschicht und einer Harzschicht montiert ist, wobei
Elektrodenanschlüsse (710, 712) einer Batteriezelle (700) durch in einem Verbindungselement (500) ausgebildete Anschlusseinführungsschlitze (510, 512) eingeführt sind, um die elektrische Verbindung zwischen den Elektrodenanschlüssen (710, 712) und dem Verbindungselement (500) auszuführen, und wobei ein Schutzschaltungsmodul(PCM)-Element (600), welches leitfähige Kopplungsteile (610, 612) aufweist, die an das Verbindungselement (500) gekoppelt werden können, an das Verbindungselement (500) gekoppelt ist, um die elektrische Verbindung zwischen dem PCM-Element (600) und dem Verbindungselement (500) auszuführen,
wobei die Kopplungsteile (610, 612) eine elastische Struktur aufweisen, bei welcher die Kopplungsteile (610, 612) eine innere Oberfläche aufweisen, die der Profilform des Verbindungselements (500) entspricht, derart dass die Kopplungsteile (610, 612) das Verbindungselement (500) umgeben können, und wobei die unteren Enden der Kopplungsteile (610, 612) offen sind, derart dass die Kopplungsteile (610, 612) in einer eingepassten Weise an das Verbindungselement (500) gekoppelt werden können.

2. Sekundärbatterie nach Anspruch 1, wobei
das Verbindungselement (500) ein polygonales oder zylindrische Element mit einer Länge gleich der oder geringer als die Breite der Batteriezelle (700) ist,
das Verbindungselement (500) Einführungsschlitze (510, 512) aufweist, durch welche die Elektrodenanschlüsse (710, 712) der Batteriezelle (700) eingeführt werden können, und
die Einführungsschlitze (510, 512) und/oder die äußere Oberfläche des Verbindungselements (500) aus einem leitfähigen Material hergestellt sind.

3. Sekundärbatterie nach Anspruch 1, wobei
das Verbindungselement (500) an vorbestimmten Bereichen (520, 522) des Verbindungselements (500), wo die Anschlusseinführungsschlitze (510, 512) ausgebildet sind, eine zylindrische Struktur aufweist, und
die Anschlusseinführungsschlitze (510, 512) und/oder die äußere Umfangsoberfläche des Verbindungselements (500) angrenzend an die Anschlusseinführungsschlitze (510, 512) aus einem leitfähigen Material hergestellt sind.

4. Sekundärbatterie nach Anspruch 1, wobei
das PCM-Element (600) eine Leiterplatte (PCB) mit einer darauf gedruckten Schutzschaltung ist, und
das PCM-Element (600) an der unteren Oberfläche von ihm mit leitfähigen Kopplungsteilen (610, 612) versehen ist, welche an das Verbindungselement (500) gekoppelt sind.

5. Batteriepack mit einer Sekundärbatterie nach einem der Ansprüche 1 bis 4 als ein Soft-Pack.

6. Verfahren zum Anfertigen der Sekundärbatterie nach Anspruch 1, umfassend die Schritte des Drückens des Verbindungselements (500), durch die Anschlusseinführungsschlitze (510, 512) von welchem die Elektrodenanschlüsse (710, 712) eingeführt worden sind, zu der Batteriezelle (700) hin und Koppeln der Kopplungsteile (610, 612) des PCM-Elements (600) an das Verbindungselement (500).

7. Verfahren nach Anspruch 6, wobei das Verbindungselement (500) mittels eines doppelseitigen Klebebands an der Batteriezelle (700) fixiert wird.

8. Verfahren nach Anspruch 6, wobei das Verbindungselement (600) an der Batteriezelle (700) mittels von Kopplungselementen, die an Kontaktbereichen der Batteriezelle (700) und des Verbindungselements (500) montiert sind, oder einer Kopplungsstruktur fixiert wird, die an den Kontaktbereichen der Batteriezelle (700) und des Verbindungselements (500) ausgebildet ist.

## Revendications

1. Batterie secondaire comprenant un ensemble électrodes monté dans un boîtier de batterie de type en tôle comportant une couche métallique et une couche de résine, dans laquelle
des bornes d'électrode (710, 712) d'une cellule de batterie (700) sont insérées à travers des fentes d'insertion de borne (510, 512) formées dans un élément de raccordement (500) de sorte à accomplir le raccordement électrique entre les bornes d'électrode (710, 712) et l'élément de raccordement (500), et un élément de module de circuit de protection (PCM) (600), qui présente des pièces de couplage conductrices (610, 612) qui peuvent être couplées à l'élément de raccordement (500), est couplé à l'élément de raccordement (500) de sorte à accomplir le raccordement électrique entre l'élément PCM (600) et l'élément de raccordement (500),
dans laquelle les pièces de couplage (610, 612) présentent une structure élastique dans laquelle les pièces de couplage (610, 612) présentent une surface intérieure correspondant à la forme en coupe de l'élément de raccordement (500), de sorte que les pièces de couplage (610, 612) peuvent entourer l'élément de raccordement (500), et les extrémités inférieures des pièces de couplage (610, 612) sont ouvertes de sorte que les pièces de couplage (610, 612) peuvent être couplées à l'élément de raccordement (500) d'une manière appropriée.

2. Batterie secondaire selon la revendication 1, dans laquelle
l'élément de raccordement (500), est un élément polygonal ou cylindrique présentant une longueur égale ou inférieure à la largeur de la cellule de batterie (700),
l'élément de raccordement (500) présente des fentes d'insertion (510, 512) à travers lesquelles les bornes d'électrode (710, 712) de la cellule de batterie (700) peuvent être insérées, et
les fentes d'insertion (510, 512) et/ou la surface extérieure de l'élément de raccordement (500) sont faites en un matériau conducteur.

3. Batterie secondaire selon la revendication 1, dans laquelle l'élément de raccordement (500) présente une structure cylindrique à des régions prédéterminées (520, 522) de l'élément de raccordement (500) où les fentes d'insertion de borne (510, 512) sont formées, et
les fentes d'insertion de borne (510, 512) et/ou la surface circonférentielle extérieure de l'élément de raccordement (500) adjacente(s) aux fentes d'insertion de bornes (510, 512) sont faites en un matériau conducteur.

4. Batterie secondaire selon la revendication 1, dans laquelle
l'élément PCM (600) est une carte de circuit imprimé (PCB) présentant un circuit de protection imprimé sur celui-ci, et
l'élément PCM (600) est doté, à la surface inférieure de celui-ci, de pièces de couplage conductrices (610, 612) qui sont couplées à l'élément de raccordement (500).

5. Bloc de batterie comportant une batterie secondaire selon fune quelconque des revendications 1 à 4 en tant que bloc léger.

6. Procédé de fabrication de la batterie secondaire selon la revendication 1 comprenant les étapes consistant à pousser l'élément de raccordement (500), à travers les fentes d'insertion de borne (510, 512) où les bornes d'électrode (710, 712) ont été insérées, en direction de la cellule de batterie (700), et à coupler les pièces de couplage (610, 612) de l'élément PCM (600) à l'élément de raccordement (500).

7. Procédé selon la revendication 6, dans lequel l'élément de raccordement (500) est fixé à la cellule de batterie (700) au moyen d'un ruban adhésif double face.

8. Procédé selon la revendication 6, dans lequel l'élément de raccordement (500) est fixé à la cellule de batterie (700) au moyen d'éléments de couplage montés à des régions de contact de la cellule de batterie (700) et de l'élément de raccordement (500) ou d'une structure de couplage formée aux régions de contact de la cellule de batterie (700) et de l'élément de raccordement (500).
